# EUROPÄISCHE PATENTSCHRIFT

(11) **EP 3 273 177 B1**
(45) Veröffentlichungstag und Bekanntmachung des Hinweises auf die Patenterteilung: **09.09.2020**
(21) Anmeldenummer: 16179979.6
(22) Anmeldetag: 18.07.2016
(51) Int. Cl.: F24H 9/18, F24H 3/04, B60H 1/22

(54) **ELEKTRISCHE HEIZVORRICHTUNG**
ELECTRIC HEATING DEVICE
DISPOSITIF DE CHAUFFAGE ÉLECTRIQUE

(43) Veröffentlichungstag der Anmeldung: 24.01.2018
(73) Patentinhaber: Eberspächer catem GmbH & Co. KG, 76863 Herxheim (DE)
(72) Erfinder: Gschwind, Thomas, 67098 Bad Dürkheim (DE)
(74) Vertreter: Grünecker Patent- und Rechtsanwälte PartG mbB

(56) Entgegenhaltungen:
- WO-A1-2007/049746
- WO-A1-2013/087671
- US-B1- 6 178 292

## Beschreibung

Die vorliegende Erfindung betrifft eine elektrische Heizvorrichtung mit einem fluiddichten Gehäuse mit Ein- und Auslassöffnungen für das zu erwärmende Fluid und zumindest einem in dem Gehäuse angeordneten wärmeerzeugenden Element welches in einem Flachrohraufgenommen ist und mit an gegenüberliegenden Seiten des Flachrohres anliegenden wärmeabgebenden Elementen.

Eine solche elektrische Heizvorrichtung ist aus der DE 10 2013 11 987 A bekannt. Dokument WO 2013/087671 A1 offenbart eine Heizeinrichtung mit den Merkmalen des Oberbegriffs des Anspruchs 1.

Der vorliegenden Erfindung liegt das Problem zugrunde, eine hinsichtlich ihrer Leistungsfähigkeit verbesserte elektrische Heizvorrichtung anzugeben.

Hierzu schlägt die vorliegende Erfindung eine elektrische Heizvorrichtung mit den Merkmalen von Anspruch 1 vor.

Diese zeichnet sich dadurch aus, dass die wärmeabgebenden Elemente unter Federvorspannung an dem Flachrohr anliegen. Dazu ist üblicherweise auf der dem Flachrohr abgewandten Seite des wärmeabgebenden Elementes ein Federelement vorgesehen, welches die wärmeabgebenden Elemente mit dem bzw. den mehreren Flachrohren nach Art eines Schichtaufbaus wärmeleitend aneinander anlegt. Es können zu beiden Seiten dieses Schichtaufbaus Federelemente vorgesehen sein. Die Federelemente klemmen üblicherweise den Schichtaufbau an seiner Außenseite.

Der Schichtaufbau besteht üblicherweise aus alternierend vorgesehenen wärmeerzeugenden Elementen und daran anliegenden wärmeabgebenden Elementen. Dadurch wird ein Heizblock geschaffen, der innerhalb des Gehäuses von dem zu erwärmenden Fluid angeströmt wird. Das Gehäuse ist fluiddicht, d. h. geeignet, eine Flüssigkeit in sich aufzunehmen und abgedichtet zu halten. Lediglich die Ein- und Auslassöffnungen schaffen Eingänge bzw. Ausgänge zu dem wärmeerzeugenden und wärmeabgebenden Element in Form des wärmeabgebenden Elementes. Bei der erfindungsgemäßen Heizvorrichtung umfasst das wärmeerzeugende Element bevorzugt, aber nicht notwendigerweise zumindest ein PTC-Element und dieses bestromende Leiterbahnen zu unterschiedlichen Polaritäten. Allerdings kann als wärmeerzeugendes Element auch ein z. B. gewickelter metallischer Leiter oder Halbleiter ausgebildet sein, der in dem Flachrohr bevorzugt unter Zwischenlage einer Isolierschicht aufgenommen ist. Im Falle eines PTC-Elementes mit Leiterbahnen unterschiedlicher Polarität liegen diese üblicherweise an einander gegenüberliegenden Flächen des PTC-Elementes an und sind über diese Anlage mit dem PTC-Element elektrisch kontaktiert. Dabei kann eine Fläche des Flachrohres eine Leiterbahn ausbilden, während die andere Leiterbahn beispielsweise in Form eines Kontaktbleches in dem Rohr aufgenommen und isolierend gegen die Innenumfangsfläche des Flachrohres abgestützt und elektrisch leitend mit dem PTC-Element kontaktiert ist. Bei einer solchen Ausgestaltung liegt das Flachrohr selbst auf einer Polarität und wird als Stromleitungsweg benutzt.

Die elektrische Heizvorrichtung ist insbesondere eine elektrische Heizvorrichtung in einem Kraftfahrzeug. Die zuvor beschriebene konkrete Ausgestaltung eignet sich für die Bestromung einer elektrischen Heizvorrichtung in einem Bordnetz mit einer Spannung von 12 V, da diese Spannung unbedenklich ist, so dass die Spannung gegebenenfalls auch außenseitig an den wärmeerzeugenden bzw. wärmeabgebenden Lagen anliegen kann.

Mit Blick auf höhervoltige Anwendungen wird gemäß einer bevorzugten Weiterbildung der vorliegenden Erfindung vorgeschlagen, die Leiterbahnen in dem Flachrohr aufzunehmen, und zwar unter Zwischenlage einer elektrischen Isolierung, die an der Innenumfangsfläche des Rohres anliegt. Dabei kann die elektrische Isolierung die Innenumfangsfläche des Flachrohres vollständig auskleiden. Alternativ können auch parallele Isolierlagen an die Hauptseitenflächen des Flachrohres innenumfänglich angelegt werden, um an der dem Flachrohr gegenüberliegenden Seite dieser Isolierung die Leiterbahnen abzustützen. Diese Leiterbahnen sind dabei üblicherweise als längliche Kontaktbleche in das Flachrohr eingeschoben. Sie klemmen zwischen sich üblicherweise unmittelbar das PTC-Element. Die entsprechende Kontaktierung in dem Flachrohr kann durch Kaltverformung des Flachrohres nach Einschieben der Leiterbahnen und des bzw. der PTC-Elemente begünstigt werden. Regelmäßig liegen in Längserstreckungsrichtung des Flachrohres mehrere PTC-Elemente hintereinander und sind zwischen den Leiterbahnen parallelgeschaltet.

Die Füllung innerhalb des Flachrohres bestehend aus den Leiterbahnen und dem PTC-Element, gegebenenfalls der Isolierlage, kann innerhalb des Flachrohres isolierend aufgenommen und eingesiegelt sein. Hierzu kann der in dem Flachrohr verbleibende Freiraum mit einer elektrisch isolierenden Vergussmasse ausgefüllt sein, um das Flachrohr außenseitig abzudichten und vor dem Eintritt des Fluids zu schützen

Gemäß einer bevorzugten Weiterbildung der vorliegenden Erfindung ist eine Schichtung aus mehreren wärmeerzeugenden und mehreren wärmeabgebenden Elementen vorgesehen. Dabei werden üblicherweise wärmeerzeugende Elemente alternierend zu wärmeabgebenden Elementen vorgesehen. Es können zwischen einzelnen wärmeerzeugenden Elementen mehrere wärmeabgebende Elemente angeordnet sein. Die wärmeabgebenden Elemente können Wellrippen-Elemente sein, die mäandrierend gebogene Blechstreifen umfassen. Alternativ können die wärmeabgebenden Elemente auch Strangpressprofile, insbesondere aus Aluminium oder Kupfer, sein. Die wärmeabgebenden Elemente haben üblicherweise sich im Wesentlichen quer zu der Schichtung erstreckende Heizrippen, bzw. Wellrippen, welche die einzelnen wärmeabgebenden Lagen und/oder wärmeerzeugenden Lagen der Schichtung auf Abstand halten. Die Wellrippen liegen üblicherweise unmittelbar an der Außenumfangsfläche des Flachrohres an. In der Regel sind identische wärmeabgebende Elemente zwischen den wärmeerzeugenden Elementen vorgesehen.

Diese Schichtung ist gemäß der vorliegenden Erfindung zwischen Gehäusewänden angelegt, die einen sich in Längsrichtung des Flachrohres erstreckenden Auslass- bzw. Einlasskanal innenseitig begrenzen. Üblicherweise erstrecken sich die entsprechenden Gehäusewände parallel zueinander und sind für die Anlage des Federelementes angepasst ausgebildet, insbesondere eben. Auf der der Schichtung gegenüberliegenden Seite der Gehäusewand teilt diese in dem Gehäuse den Ein- bzw. Auslasskanal ab. Es versteht sich, dass der Einlasskanal auf einer Seite der Schichtung sich in dem Gehäuse zu der Schichtung hin öffnet, wohingegen der andere Kanal sich auf der gegenüberliegenden Seite der Schichtung zu dieser öffnet, um eine Strömung von der Einlass- zu der Auslassseite durch die Schichtung hindurch zu erzwingen. Dabei kann die Schichtung leicht schräg angeordnet sein, so dass zwischen Gehäusewandungen und der Schichtung hin zu dem Ein- bzw. Auslasskanal ein sich verbreiternder Strömungskanal vorgesehen ist. Hierdurch wird eine gleichmäßige Durchströmung der Schichtung in Höhenrichtung begünstigt und ein geringer Druckverlust bei der Durchströmung des flüssigen Fluids durch das Gehäuse bei gleichzeitiger Erwärmung des Fluids begünstigt.

Das Gehäuse kann ganz oder teilweise aus Metall oder Kunststoff bestehen. Bei der Ausgestaltung als elektrische Heizvorrichtung in einem Kraftfahrzeug kommt es auch darauf an, das Gehäuse möglichst gewichtssparend auszubilden. So kann das Gehäuse ganz oder teilweise aus Aluminium bestehen und als Strangpressprofil ausgebildet sein.

Gemäß einer bevorzugten Weiterbildung der vorliegenden Erfindung ist der Einlasskanal im Wesentlichen über die gesamte Länge des Flachrohres zu der Schichtung aus wärmeabgebenden und wärmeerzeugenden Elementen hin offen. So wird das aus dem Einlasskanal abgegebene Fluid über die gesamte Länge des Flachrohres gleichmäßig in Richtung auf die Schichtung abgegeben. In entsprechender Weise ist auch der Auslasskanal im Wesentlichen über die gesamte Länge des Flachrohres zu der Schichtung hin offen, um das in der Schichtung erwärmte Fluid möglichst ohne hohen Druckverlust auf der Fluidseite aus der elektrischen Heizvorrichtung abzuführen. Dabei wird regelmäßig davon ausgegangen, dass das Gehäuse aus einem Gehäuseblock besteht, welcher endseitig mit Verschlusskappen verschlossen ist. Die Länge des Gehäuseblockes entspricht bevorzugt im Wesentlichen der Länge des Flachrohres. Üblicherweise sind sämtliche Flachrohre mit identischer Länge vorgesehen und zumindest endseitig an eine der Verschlusskappen angeschlossen.

Die Verschlusskappen verschließen gemäß einer bevorzugten Weiterbildung der vorliegenden Erfindung dichtend die Stirnseiten des Gehäuseblocks. Dieser Gehäuseblock kann aus Aluminium und als Strangpressprofil ausgebildet sein. Die Verschlusskappen können aus Metall oder Kunststoff gebildet sein. Insbesondere die den Anschluss des PTC-Elementes ermöglichende Verschlusskappe sollte mit Blick auf die notwendige Isolierung der Leiterbahnen unterschiedlicher Polarität auch auf der Anschlussseite aus einem Kunststoff bestehen. Dabei liegen die Verschlusskappen bevorzugt unter Zwischenlage einer elastischen Dichtung an dem Gehäuseblock an. Spannschrauben können den Gehäuseblock in Längsrichtung, d. h. parallel zu der Längserstreckungsrichtung des Flachrohres durchsetzen und die an gegenüberliegenden Seiten vorgesehenen Verschlusskappen gegen den Gehäuseblock verspannen. Es versteht sich von selbst, dass der Gehäuseblock dazu an seinen sich gegenüberliegenden Endseiten, an denen der Gehäuseblock offen ist, eine ebene Anlagefläche aufweisen sollte. Die Verschlusskappen können eine Nut zur Aufnahme der Dichtung aufweisen. Der Gehäuseblock sollte bevorzugt lediglich ebene und einfach herzustellende Anlageflächen haben. Bei einer Ausbildung der Verschlusskappen als Kunststoff-Spritzgussteile und eines Gehäuseblocks als Aluminium-Strangpressprofil ergibt sich somit eine leicht und einfach herzustellende Gestaltung.

So wird gemäß einer bevorzugten Weiterbildung der vorliegenden Erfindung auch vorgeschlagen, dass zumindest eine der Verschlusskappen einen die Ein- bzw. Auslassöffnung umgebenden Anschlussstutzen aufweisen sollte. Üblicherweise weist diese Verschlusskappe zwei Anschlussstutzen auf, nämlich einen Anschlussstutzen für die Einlassseite und einen für die Auslassseite.

Bevorzugt liegt das Flachrohr abgedichtet gegen eine der Verschlusskappen an und eine mit der Leiterbahn elektrisch gekoppelte Anschlusszunge ist elektrisch isoliert durch diese Verschlusskappe hindurch geführt. Dazu kann das bzw. die Flachrohre mittels Umspritzen bei der spritzgießtechnischen Herstellung der Verschlusskappe aus Kunststoff mit der Verschlusskappe verbunden und darin abgedichtet sein, wobei die Anschlusszunge, bevorzugt sämtliche Anschlusszungen, zu den einzelnen wärmeerzeugenden Elementen durch die Verschlusskappe hindurch geführt sind und an der dem Flachrohr gegenüberliegenden Seite der Verschlusskappe freiliegen für den elektrischen Anschluss.

Gemäß einer bevorzugten Weiterbildung der vorliegenden Erfindung ist die Schichtung schräg eingebaut, sodass ein Strömungsquerschnitt zwischen der Schichtung und dem Gehäuse mit zunehmendem Abstand von dem Ein- bzw. Auslasskanal abnimmt. Dieser Strömungsquerschnitt erstreckt sich dabei rechtwinklig zu dem zugeordneten Kanal. Der Strömungsquerschnitt ist üblicherweise durchgängig und bevorzugt mit konstantem Querschnitt in Längserstreckungsrichtung, d. h. axialer Richtung eines Gehäuseblocks ausgebildet. Er verjüngt sich quer zu dieser Längserstreckung, die im Wesentlichen der Längserstreckung des entsprechenden Kanals entspricht.

Gemäß einer bevorzugten Weiterbildung der vorliegenden Erfindung hat das Gehäuse eine Trennwand. Diese Trennwand wird bevorzugt einteilig durch den Gehäuseblock ausgebildet, der bei dieser bevorzugten Ausgestaltung aus Metall geformt ist, beispielsweise Aluminium oder Kupfer. Die Trennwand begrenzt bevorzugt den Einlasskanal zumindest teilweise, d. h. ist auf der kalten Seite der Heizvorrichtung vorgesehen. Die Trennwand trennt eine Zirkulationskammer für das zu erwärmende Fluid von einer Steuerkammer zur Aufnahme einer Steuervorrichtung. Diese Steuervorrichtung hat bei der hier diskutierten bevorzugten Ausgestaltung zumindest einen Verlustleistung erzeugenden Leistungsschalter, der wärmeleitend mit der Trennwand gekoppelt ist. So wird die Verlustleistung auch zum Erwärmen des Fluids genutzt und damit gleichzeitig der Leistungsschalter effektiv gekühlt.

Insbesondere bei einer Ausgestaltung, bei welcher eine der Verschlusskappen die Anschlussstutzen zu den Ein- und Auslassöffnungen aufweist, ist der anderen der Verschlusskappen bevorzugt eine Leiterplatte hinterlegt, deren Leiterbahnen mit den Leiterbahnen zu mehreren wärmeerzeugenden Elementen elektrisch leitend verbunden sind. Die Leiterplatte kann lediglich Leiterbahnen zum Gruppieren der wärmeerzeugenden Elemente aufweisen. In diesem Fall ist die Leiterplatte nicht mit Bauelementen bestückt, sondern weist lediglich Kontaktelemente zur Kontaktierung der einzelnen Anschlusszungen zu den wärmeerzeugenden Elementen auf. In diesem Fall ist üblicherweise eine zweite Leiterplatte mit Bauelementen vorgesehen, deren wärmeerzeugender Leistungsschalter wärmeleitend üblicherweise mit der kalten Seite der Heizvorrichtung gekoppelt ist. Eine solche zweite Leiterplatte kann sich parallel zu den Lagen der Schichtung, d. h. parallel zu dem Flachrohr, erstrecken.

Das Gehäuse umfasst einen üblicherweise einteilig ausgebildeten Gehäuseblock, der in der Regel ein Aluminium-Strangpressteil sein kann, jedenfalls aber bevorzugt eine zylindrische Ausgestaltung hat. Dessen Querschnittsgeometrie erstreckt sich üblicherweise quer der Längserstreckung der Ein- und Auslasskanälen. Wie zuvor bereits erwähnt, weist der Gehäuseblock üblicherweise die Anlageflächen für die Schichtung auf, die ebenfalls Teil der zylindrischen Ausrichtung und Ausgestaltung des Gehäuseblocks sind.

Bevorzugt hat der Gehäuseblock des Weiteren eine Schiebeführung für die Leiterplatte, in die die Leiterplatte einschiebbar ist und in der die Leiterplatte unter Vorspannung gegen eine durch den Gehäuseblock ausgebildete Trennwand anliegend gehalten ist. Dabei liegt die Leiterplatte üblicherweise nicht unmittelbar gegen die Trennwand an. Vielmehr ist die Leiterplatte üblicherweise auf der der Trennwand zugewandten Seite mit einem oder mehreren Leistungstransistoren bestückt, die unter Zwischenlage einer Isolierschicht elektrisch isoliert, jedoch mit guter Wärmeleitfähigkeit an der Trennwand anliegen. Dabei kann die leiterplatte selbst unter Spannung gehalten werden, d. h. durch elastische Verformung den Leistungstransistor gegen die Trennwand anlegen. Ebenso gut kann zumindest eine der die Schiebeführung ausbildenden Nuten dicker als die Leiterplatte ausgebildet und mit einem Kompressionselement versehen sein, welches die Leiterplatte in Richtung auf die Trennwand vorspannt. So kann die Leiterplatte zunächst in die Schiebeführung eingeschoben werden und ist danach parallel zur Längserstreckung des Gehäuseblocks verschieblich, in einer Richtung rechtwinklig hierzu, aber im Wesentlichen vorbestimmt gehalten. Durch Einbringen eines Vorspannelementes in zumindest eine der Nuten erfolgt ein Andrücken der Leiterplatte gegen die Trennwand, wodurch die Leiterplatte ortsfest gegenüber der Trennwand fixiert ist.

Weitere Einzelheiten und Vorteile der vorliegenden Erfindung ergeben sich aus der nachfolgenden Beschreibung eines Ausführungsbeispieles in Verbindung mit der Zeichnung. In dieser zeigen:
- Figur 1: eine perspektivische Seitenansicht als Explosionsdarstellung des Ausführungsbeispiels;
- Figur 2: eine perspektivische Seitenansicht eines wärmeerzeugenden Elementes des Ausführungsbeispiels in Explosionsdarstellung;;
- Figur 3: eine perspektivische Seitenansicht eines wärmeerzeugenden und eines daran anliegenden wärmeabgebenden Elementes des Ausführungsbeispiels;
- Figur 4: eine perspektivische Seitenansicht der Schichtung des Ausführungsbeispiels mit Montagehilfen;
- Figur 5: eine perspektivische stirnseitige Ansicht des Ausführungsbeispiels nach Einbau der in Figur 4 gezeigten Schichtung beim Einführen eines Federelementes;
- Figur 6: eine Ansicht in etwa gemäß Figur 5 nach dem Einbringen des Federelementes und einer Leiterplatte;
- Figur 7: eine Längsschnittansicht des Ausführungsbeispiels,
- Figur 8: eine vergrößerte Darstellung des Details VII gemäß der Darstellung in Figur 7 und
- Figur 9: eine perspektivische stirnseitige Ansicht des Ausführungsbeispiels nach Einbau der in Figur 4 gezeigten Schichtung bei einseitig abgenommenen Abdeckelement.

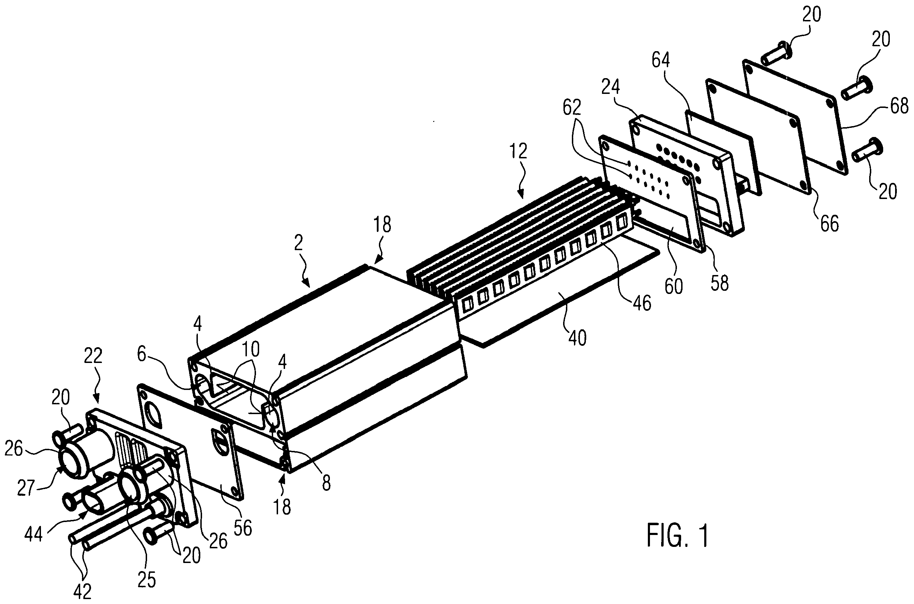

In den Figuren kennzeichnet Bezugszeichen 2 einen als Aluminium-Strangpressprofil ausgebildeten Gehäuseblock, der einteilig ausgebildet ist und Gehäusewände 4 einteilig ausformt, die einen Einlasskanal 6 bzw. einen Auslasskanal 8 innenseitig begrenzen und an der den Kanälen 6, 8 gegenüberliegenden Seite ebene und sich parallel zueinander erstreckende Anlageflächen 10 für eine Schichtung 12 aus wärmeabgebenden Elementen 14 und wärmeerzeugenden Elementen 16 ausbilden. In Eckbereichen des Gehäuseblocks 2 sind durchgehend in dem Gehäuseblock 2 ausgesparte Durchgangsbohrungen 18 vorgesehen, die im montierten Zustand von Spannschrauben durchsetzt sind, welche aus Kunststoff geformte Verschlusskappen 22, 24 dichtend gegen den Gehäuseblock 2 anlegen In Figur 1 sind davon lediglich Befestigungsmuttern 20 zu nicht dargestellten Gewindestangen gezeigt, die in den Durchgangsbohrungen 18 aufgenommen sind und sich über die Länge des Gehäuseblocks 2 ertsrecken. Wie Figur 1 verdeutlicht, hat die dort vorne eingezeichnete Verschlusskappe 22 zwei Anschlussstutzen 26, die als Schlauchanschlussstutzen einteilig an der Verschlusskappe 22 ausgebildet sind, Ein- bzw. Auslassöffnungen 25, 27 umgeben und unmittelbar und absatzfrei mit den Ein- bzw. Auslasskanälen 6, 8 fluchten.

Die Schichtung 12 sitzt schräg in dem Gehäuseblock 2, so dass ein Strömungsquerschnitt 29 zwischen der Schichtung 12 und dem Gehäuseblock 2 mit zunehmendem Abstand von dem Ein- bzw. Auslasskanal 6, 8 abnimmt. Dieser Strömungsquerschnitt 29 liegt in einer Querschnittsebene durch den Gehäuseblock 2 und liegt rechtwinklig zu der Längserstreckung des Ein- bzw. Auslasskanals.

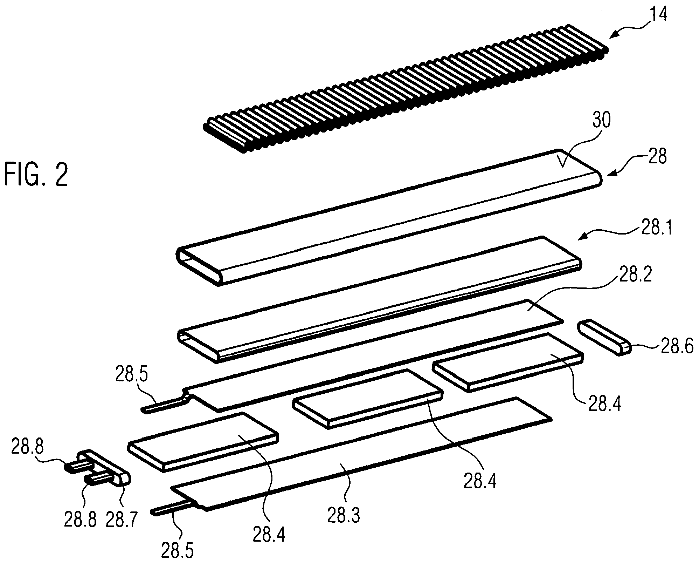

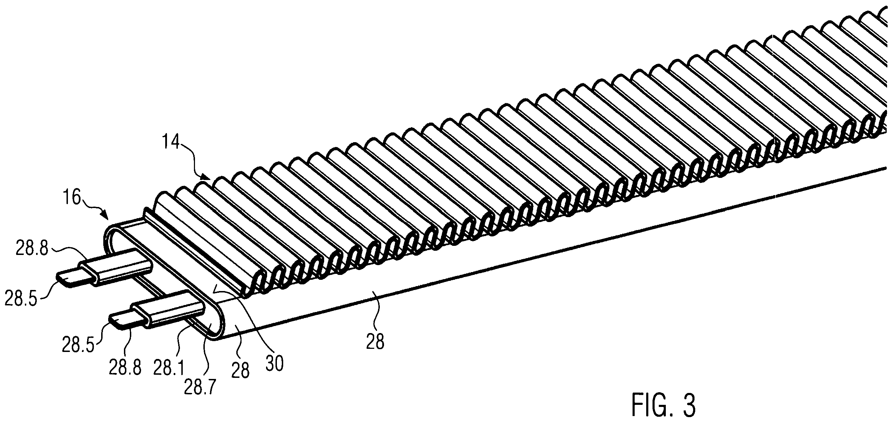

Unter Bezugnahme auf die Figuren 2 bis 4 wird der Aufbau der Schichtung 12 nachstehend näher erläutert. Die wärmeabgebenden Elemente 14 sind jeweils identisch ausgebildet. Es handelt sich um mäandrierend gebogene Blechstreifen, die sich im Wesentlichen rechtwinklig zu den Lagen der Schichtung 12 erstreckende Wellrippen ausbilden. Die Wellrippenlagen können für sich federnde Eigenschaften haben, um die Schichtung 12 unter Vorspannung gegen die Anlagefläche 10 der Gehäusewände 4 anzulegen und die einzelnen Elemente 14, 16 der Schichtung 12 unter Vorspannung gegeneinander zu halte<n. Hierdurch wird eine gute Wärmeübertragung an den Grenzflächen zwischen den einzelnen Elementen 14, 16 der Schichtung 12 gewährleistet. Des Weiteren erlaubt eine solche Federvorspannung eine gute elektrische Kontaktierung der einzelnen Lagen der wärmeerzeugenden Elemente 16.

Die Bestandteile dieses wärmeerzeugenden Elementes 16 sind in Figur 2 verdeutlicht. Das wärmeerzeugende Element 16 umfasst jeweils ein Flachrohr 28, welches innenseitig mit einer tüllenförmigen, d. h. zylindrischen Isolierung 28.1 in Form einer isolierenden Folie, wie beispielsweise Polyimid oder Kapton ausgekleidet ist. Innerhalb der Isolierung 28.1 sind Kontaktbleche 28.2, 28.3 aufgenommen, die zwischen sich PTC-Elemente 28.4 aufnehmen und unmittelbar elektrisch leitend daran anliegen. Die Isolierung 28.1 kann eine elektrisch isolierende wärmebbeständige Folie umfassen, die ein- oder beidseitig mit PTFE beschichtet sein kann. Die isolierende Folie kann unter Druck und Wärme mit der Innenseite des Flachrohres 28 verschweißt werden, beispielsweise beim Betrieb der Heizvorrichtung. Die PTC-Elemente 28.4 sind mit einer Metallisierung versehen, die als Beschichtung auf den PTC-Elementen 28.4 aufgebracht ist.

Jedes Kontaktblech 28.2., 28.3 hat eine durch Stanzen und Biegen einteilig daran ausgebildete Kontaktzunge 28.5. An der einen Seite ist das Flachrohr 28 durch einen Endstopfen 28.6 aus Kunststoff verschlossen, der dichtend in das Flachrohr 28 bzw. die Isolierung 28.1 eingeklebt ist. Auf der gegenüberliegenden Seite ist in gleicher Weise eine Endkappe 28.7 vorgesehen, die aus Kunststoff hergestellt und einteilig daran ausgebildete Führungshülsen 28.8 für die jeweiligen Kontaktzungen 28.5 ausformt. Wie ersichtlich sind die Kontaktzungen 28.5 endseitig umbogen und befinden sich in etwa auf mittlerer Höhe der PCT-Elemente 28.4.

Die vorliegende Erfindung ist nicht auf das in Figur 2 konkret gezeigte und hier beschriebene Ausführungsbeispiel beschränkt. Als Isolierung gegen Hauptseitenflächen 30 des Flachrohres 28 können auch isolierende Lagen vorgesehen sein beispielsweise Keramikplatten, Kunststofffolien oder mit Kunststofffolie beschichtete Keramikplatten. Die Isolierung ist eine elektrische Isolierung, die bevorzugt eine gute Wärmeleitfähigkeit von zumindest 20 W/(m K) haben sollte. Die einzelnen Lagen des Schichtaufbaus, bestehend aus der Isolierung 28.1 den Kontaktblechen 28.2, 28.3 sowie den PTC-Elementen 28.4 sind üblicherweise lose in das Flachrohr 28 eingeschoben. Durch die Endkappe 28.7 bzw. den Endstopfen 28.6 sind diese Elemente axial zunächst innerhalb des Flachrohres 28 fixiert. Das wärmeerzeugende Element kann im Wesentlichen auch so ausgebildet sein, wie dies EP 2 428 746 A1 lehrt.

Diese Elemente innerhalb des Flachrohres 28 können lose in dem Flachrohr 28 aufgenommen sein. Endseitig kann das Flachrohr 28 mit einem Dichtstopfen beispielsweise aus einer in das Flachrohr 28 eingefüllten Abdichtungsmasse versehen sein.

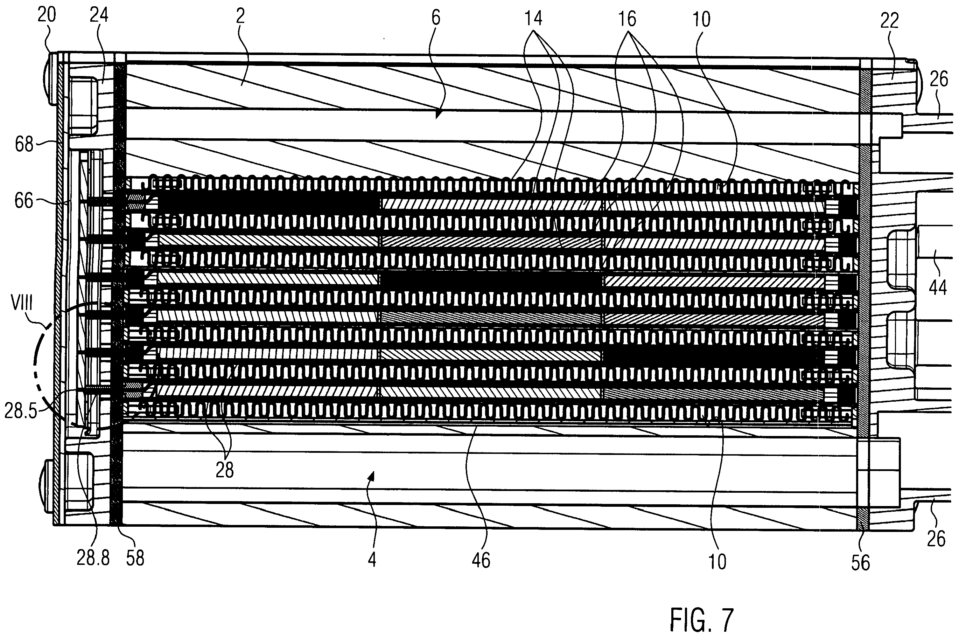

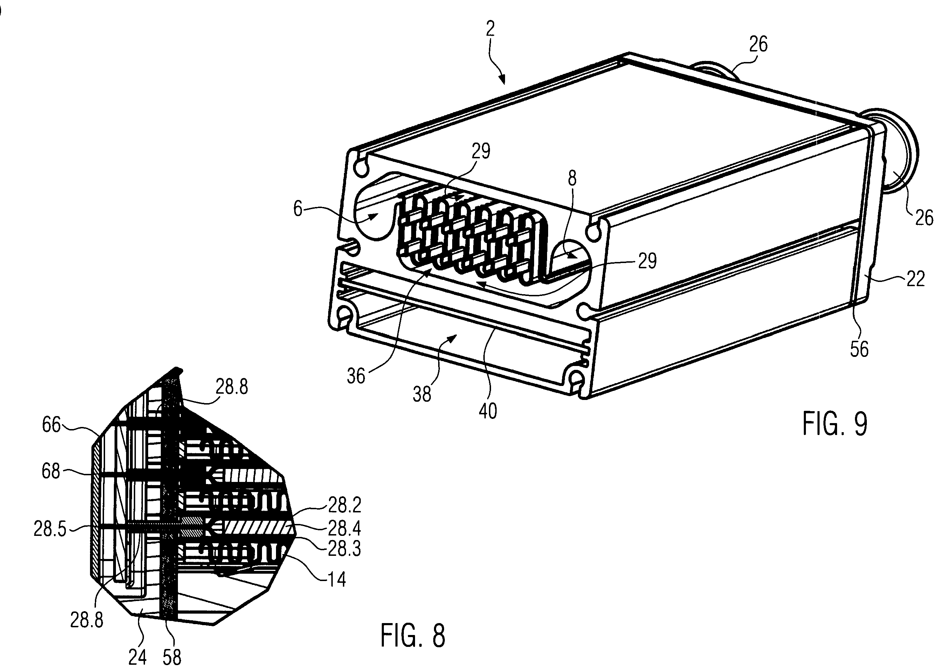

Bei dem gezeigten Ausführungsbeispiel kann eine der Verschlusskappen 22 für den elektrischen Anschluss der wärmeerzeugenden Elemente 16 sorgen. Bei dem gezeigten Ausführungsbeispiel sind sämtliche Flachrohre 28 an der gleichen Seite von den Anschlusszungen 28.5 überragt. Diese Anschlusszungen 28.5 durchsetzen eine der Verschlusskappen 24 und liegen auf der der Schichtung 12 gegenüberliegenden Seite der Verschlusskappe frei, um dort die Schichtung 12 elektrisch anzuschließen (vgl. Figuren 7 und 8).

Bei dem Ausführungsbeispiel bildet der Gehäuseblock 2 eine Trennwand 34 aus, die eine Zirkulationskammer 36 für das zu erwärmende flüssige Medium, vorliegend Wasser, von einer Steuerkammer 38 trennt, in der eine mit Bezugszeichen 40 gekennzeichnete Leiterplatte aufgenommen ist. Die Leiterplatte 40 ist bestückt und trägt u. a. Verlustleistung erzeugende Leistungstransistoren 41, die wärmeleitend unter Zwischenlage einer Isolierschicht 43 gegen die Trennwand 34 anliegen. Die Trennwand 34 trennt dabei den Gehäuseblock 2 auf der Einlassseite, d. h. begrenzt teilweise den Einlasskanal 6. Dementsprechend befindet sich die Trennwand 34 auf der kalten Seite, so dass ein maximaler Temperaturgradient zwischen der Leiterplatte 40 und dem Fluid innerhalb der Zirkulationskammer 36 und damit eine effektive Kühlung des Verlustleistung erzeugenden Leistungsschalters 41 gewährleistet ist.

Die Figur 1 zeigt eine Verschlusskappe 22 mit den beiden Anschlussstutzen 26, sowie elektrisch mit den Leiterbahnen der Leiterplatte 40 und/oder dem Verlustleistung erzeugenden Leistungstransistor 41 verbundene elektrische Leistungskabel 42 für den Leistungsstrom. Vorliegend sind die Kabel 42 unmittelbar in die Steuerkammer 38 innerhalb des Gehäuseblocks 2 hineingeleitet. Ebenso gut kann die Verschlusskappe 22 auch einen Stecker für den Anschluss der Leistungskabel 42 aufweisen. Mit Bezugszeichen 44 ist ein Steckergehäuse für Steuerkabel gekennzeichnet, die mit der auf der Leiterplatte 40 verwirklichten Steuerung elektrisch verbunden sind.

Wie Figur 1 erkennen lässt, ist die Schichtung 12 über ein Federelement 46 innerhalb des Gehäuseblocks 2 unter Vorspannung gehalten, und zwar zwischen den sich gegenüberliegenden und sich parallel zueinander erstreckenden Anlageflächen 10. Das Federelement kann dabei so ausgebildet sein, wie dies EP 2 298 582 A1 offenbart, die durch Bezugnahme in den Inhalt dieser Anmeldung aufgenommen wird. Dies bietet die Möglichkeit, die Schichtung 12 zusammen mit dem Federelement 46 im Wesentlichen spannungsfrei zwischen die beiden Anlageflächen 10 anzuordnen und danach durch Verschieben der Blechstreifen des Federelementes 46 die Federspannung aufzubringen. So kann die Schichtung 12 zusammen mit dem Federelement 46 spannungsfrei in den Gehäuseblock 2 eingebracht werden.

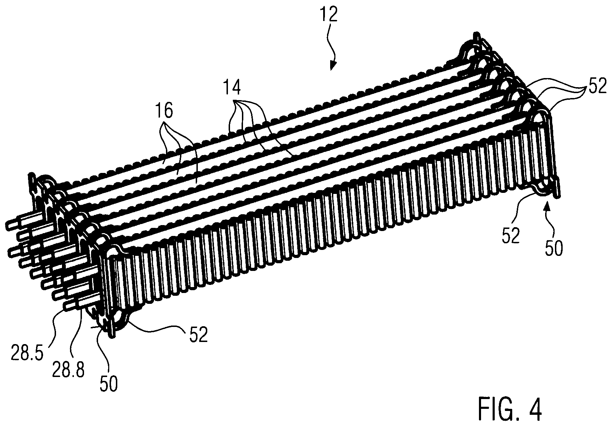

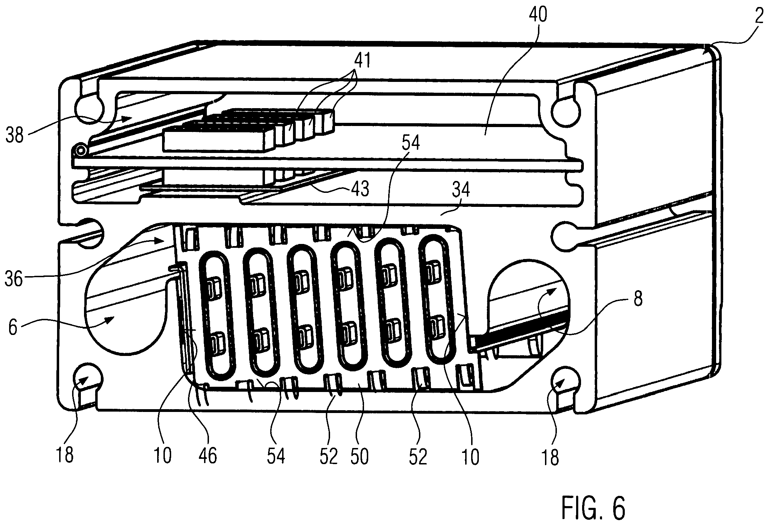

Bei der Montage der Schichtung 12 innerhalb des Gehäuseblocks 2 kommt bevorzugt eine Montagehilfe 50 zum Einsatz, die in den Figuren 4 bis 6 gezeigt ist. Die Montagehilfe 50 ist aus einem gestanzten Blechstück geformt. Figur 4 verdeutlicht zwei Montagehilfen 50 an den jeweiligen Stirnseiten der Schichtung 12. Mit Blick auf eine universelle Verwendbarkeit sind die Montagehilfen 50 an beiden Stirnseiten der Schichtung 12 bevorzugt identisch. Die Montagehilfe 50 hat Bohrungen, die zur endseitigen Aufnahme der Flachrohre 28 angepasst ausgebildet sind (vgl. Figur 6). Zwischen diesen Ausnehmungen sind Federarme 52 vorgesehen, die an die sich gegenüberliegenden Oberflächen der wärmeabgebenden Wellrippenlagen 14 anliegen, wie dies in Figur 4 gezeigt ist. Dadurch ist die Schichtung 12 mit ihren zunächst lose aneinander bzw. nebeneinander liegenden wärmeabgebenden und wärmeerzeugenden Elementen 14, 16 zu einer Montageeinheit zusammengefasst. Auf diese Weise kann die in Figur 4 gezeigte vormontierte Einheit in den Gehäuseblock 2 eingeführt werden. Die Federarme 52 legen sich dabei an sich gegenüberliegende Anlageflächen, die durch den Gehäuseblock 2 ausgebildet sind und sich parallel zueinander erstrecken. Diese Parallelflächen sind mit Bezugszeichen 54 in Figur 6 gekennzeichnet und begrenzen außenseitig den jeweiligen Strömungsquerschnitt 29 zu dem Einlass- bzw. Auslasskanal 6, 8. Die Montagehilfe 50 kann nach erfolgter Montage in dem Gehäuseblock 2 darin verbleiben, um die Schichtung darin zu halten, auch wenn üblicherweise die Federspannung für die Verspannung und Halterung der Schichtung zwischen den Analgenflächen 10 dazu ausreicht.

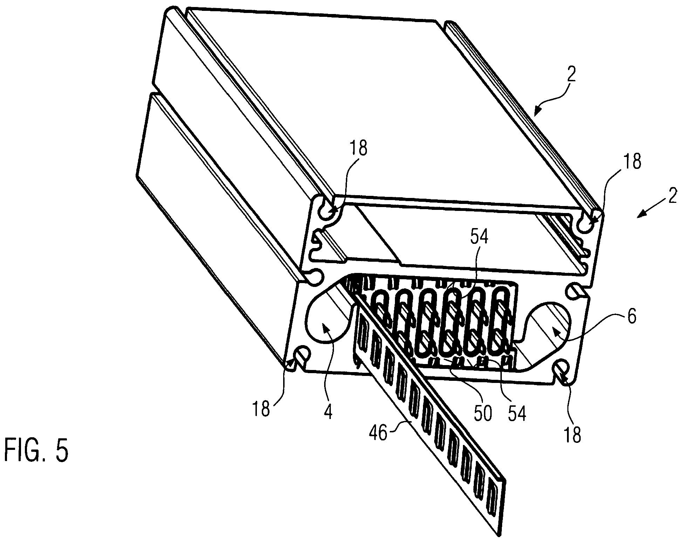

In dieser Weise fixiert, wird nunmehr einseitig (vgl. Figur 5) oder auch beidseitig das Federelement 46 in den Gehäuseblock 2 eingeschoben, um die Schichtung 12 zwischen den sich gegenüberliegenden Anlageflächen 10 einzuspannen und zu verspannen. Dabei kann an der Innenseite der Anlagefläche 10 eine elektrische Isolierung vorgesehen sein als zusätzlicher elektrischer Schutz des Gehäuseblocks 2 vor den stromleitenden Elementen für den Fall, dass die Isolierung 28.1 innerhalb des Flachrohres 28 versagt.

Wie die Figuren 1 und 7 bzw. 8 verdeutlichen, ist zwischen der Verschlusskappe 22 und dem Gehäuseblock 2 eine Dichtplatte 56 als Flachdichtung vorgesehen, die im Wesentlichen flächig gegen eine Stirnseite des Gehäuseblocks 2 anliegt und Bohrungen entsprechend der Lage der Ein- und Auslasskanäle 6, 8 sowie der Lage der Durchgangsbohrungen 18 aufweist.

Eine ähnliche Dichtplatte 58 ist auf der gegenüberliegenden Seite zwischen der Verschlusskappe 24 und dem Gehäuseblock 2 vorgesehen. Diese Dichtplatte 58 hat eine große Durchlassöffnung 60, die im Wesentlichen mit der Steuerkammer 38 fluchtet. Des Weiteren weist die Dichtplatte 58 eine Vielzahl von Bohrungen 62 auf, die zum Hindurchleiten der Führungshülsen 28.8 angepasst ausgebildet sind, ansonsten aber die Dichtplatte 58 dichtend gegen die Stirnseite der Flachrohre 28 liegt. Die Flachrohre sind auch endseitig innerhalb der Zirkulationskammer 36 aufgenommen und innerhalb dieser Zirkulationskammer 36 abgedichtet aufgenommen.

Auf der der Dichtplatte 58 gegenüberliegenden Seite der Verschlusskappe 24 befindet sich eine Anschlussleiterplatte 64, die mit sämtlichen Kontaktzungen 28.5 elektrisch kontaktiert ist und diese gruppieren kann, um mehrere wärmeerzeugende Elemente 16 einem einheitlichen Heizkreis zuzuordnen. Die entsprechenden Leiterbahnen zu den einzelnen wärmeerzeugenden Elementen 16 sind elektrisch über eine Board-to-Board Steckverbindung mit Leiterbahnen der Steuerleiterplatte 40 verbunden. Die Anschlussleiterplatte 64 liegt zwischen der Verschlusskappe 24 und einer Abdichtplatte 66, die aufgrund einer durch eine Abdeckung 68 bewirkte Anpresskraft dichtend zwischen der Abdeckung 68 und der Verschlusskappe 24 anliegt, um die Anschlussleiterplatte 64 hermetisch einzusiegeln.

Die Besonderheit der vorliegenden Erfindung besteht insbesondere darin, dass das Flachrohr nicht an sich stabil bzw. formsteif ist, sondern lediglich eine äußere Umschließung bildet, die die einzelnen Bestandteile des wärmeerzeugenden Elementes 16 in sich aufnehmen kann. Erst durch eine äußere Kraft werden die Lagen des wärmeerzeugenden Elementes 16 gegeneinander angepresst, Dabei ergibt sich unter der Vorspannung des Federelementes 46 eine gute elektrische Anlage zwischen den beiden Kontaktflächen 28.2 und 28.3 gegen die Hauptseitenfläche des PTC-Elementes 28.4. Des Weiteren wird das PTC-Element 28.4 unter Vermittlung durch die Kontaktfläche 28.2, 28.3 und die Isolierung 28.1 gut wärmeleitend gegen die Innenumfangsfläche des Flachrohres 28 angelegt, welches die innerhalb des Flachrohres 28 erzeugte Wärme nach außen und an die wärmeabgebenden Elemente 14 abgibt. Als Flachrohre 28 können dabei Flachrohre aus einem dünnen Aluminiumblech infrage kommen. Zusätzlich zu der durch das Federelement 46 bewirkten Druckkraft kann auch der Flüssigkeitsdruck das Innere des jeweiligen Flachrohres 28 komprimieren.

Die als wärmeabgebenden Elemente 14 vorgesehenen Wellrippenelemente sind vorzugsweise so ausgebildet, dass sie eine turbulente Strömung erzeugen. Dazu kann die Oberfläche der Wellrippenelemente aufgeraut sein, beispielsweise mittels Kugelstrahlen, Plasmastrahlen oder Sandstrahlen. Der Gehäuseblock 2 führt zu einer baulichen Einheit von Steuerkammer 38 und Zirkulationskammer 36, wobei die wärmeabgebenden Leistungstransistoren 41 der kalten Seite, d. h. dem Einlasskanal 6, zugeordnet und dementsprechend effektiv gekühlt werden.

### Bezugszeichenliste

- 2: Gehäuseblock
- 4: Gehäusewand
- 6: Einlasskanal
- 8: Auslasskanal
- 10: Anlagefläche
- 12: Schichtung
- 14: wärmeabgebendes Element
- 16: wärmeerzeugendes Element
- 18: Durchgangsbohrung
- 20: Befestigungsmutter
- 22: Verschlusskappe
- 24: Verschlusskappe
- 25: Einlassöffnung
- 26: Anschlussstutzen
- 27: Auslassöffnung
- 28: Flachrohr
- 28.1: Isolierung
- 28.2: Kontaktblech
- 28.3: Kontaktblech
- 28.4: PTC-Element
- 28.5: Kontaktzunge
- 28.6: Endstopfen
- 28.7: Endkappe
- 28.8: Führungshülse
- 29: Strömungsquerschnitt
- 30: Hauptseitenfläche
- 34: Trennwand
- 36: Zirkulationskammer
- 38: Steuerkammer
- 40: Leiterplatte
- 41: Leistungstransistor
- 42: Leistungskabel
- 43: Isolierschicht
- 44: Steckergehäuse
- 46: Federelement
- 50: Montagehilfe
- 52: Federarm
- 54: Parallelfläche
- 56: Abdichtplatte/Flachdichtung
- 58: Abdichtplatte/Flachdichtung
- 60: Durchlassöffnung
- 62: Bohrung
- 64: Anschlussleiterplatte
- 66: Abdichtplatte/Flachdichtung
- 68: Abdeckung

## Patentansprüche

1. Elektrische Heizvorrichtung mit einem fluiddichten Gehäuse (2, 22, 24) mit Ein- und Auslassöffnungen (25, 27) für das zu erwärmende Fluid und zumindest einem in dem Gehäuse (2, 22, 24) angeordneten wärmeerzeugenden Element (16) welches in einem Flachrohr (28) aufgenommen ist, und mit an gegenüberliegenden Seiten des Flachrohres (28) anliegenden wärmeabgebenden Elementen (14), wobei die wärmeabgebenden Elemente (14) unter Federvorspannung an dem Flachrohr (28) anliegen, wobei eine Schichtung (12) aus wärmeerzeugenden und wärmeabgebenden Elementen (14, 16) vorgesehen ist, **dadurch gekennzeichnet, dass** die Schichtung (12) zwischen Gehäusewänden (4) anliegt, die einen sich in Längsrichtung des Flachrohres (28) erstreckenden Ein- bzw. Auslasskanal (6, 8) innenseitig begrenzen.

2. Elektrische Heizvorrichtung nach Anspruch 1, **dadurch gekennzeichnet, dass** das wärmeerzeugende Element (16) zumindest ein mit Leiterbahnen (28.2; 28.3) zu unterschiedlichen Polaritäten kontaktiertes PTC-Element (28.4) aufweist, das unter Federvorspannung gegen das Flachrohr (28) anliegt.

3. Elektrische Heizvorrichtung nach Anspruch 1 oder 2, **dadurch gekennzeichnet, dass** die Leiterbahnen in dem Flachrohr (28) aufgenommen sind und unter Zwischenlage einer elektrischen Isolierung an der Innenumfangsfläche des Flachrohres (28) anliegen.

4. Elektrische Heizvorrichtung nach einem der vorherigen Ansprüche, **dadurch gekennzeichnet, dass** der Ein- bzw. Auslasskanal (6, 8) im Wesentlichen über die gesamte Länge des Flachrohres (28) zu der Schichtung aus wärmeabgebenden und wärmeerzeugenden Elementen (14, 16) hin offen ist.

5. Elektrische Heizvorrichtung nach einem der vorherigen Ansprüche, **dadurch gekennzeichnet, dass** das Gehäuse (2, 22, 24) einen eine Anlagefläche (10) für die Schichtung (12) aus wärmeabgebenden und wärmeerzeugenden Elementen (14, 16) ausbildenden Gehäuseblock (2) aufweist, dessen Länge im Wesentlichen der Länge des Flachrohres (28) entspricht, der in Längsrichtung des Flachrohres (28) zu beiden Seiten offen und überdichtend gegen den Gehäuseblock (2) anliegende Verschlusskappen (22, 24) verschlossen ist.

6. Elektrische Heizvorrichtung nach Anspruch 5, **dadurch gekennzeichnet, dass** zumindest eine der Verschlusskappen (22) einen die Ein- bzw. Auslassöffnung umgebenden Anschlussstutzen (26) aufweist.

7. Elektrische Heizvorrichtung nach Anspruch 5 oder 6, **dadurch gekennzeichnet, dass** das Flachrohr (28) abgedichtet gegen eine der Verschlusskappen (22, 26) anliegt und zumindest eine mit einer der Leiterbahnen elektrisch gekoppelte Anschlusszunge (32) durch die Verschlusskappe (22) elektrisch isoliert hindurchgeführt ist.

8. Elektrische Heizvorrichtung nach einem der vorherigen Ansprüche, **dadurch gekennzeichnet, dass** die Schichtung (12) zwischen durch einen einteiligen Gehäuseblock (2) ausgebildeten Anlageflächen (10) eingespannt ist.

9. Elektrische Heizvorrichtung nach einem der vorherigen Ansprüche, **dadurch gekennzeichnet, dass** die Schichtung (12) schräg eingebaut ist, so dass ein Strömungsquerschnitt (29) zwischen der Schichtung (12) und dem Gehäuse (2) mit zunehmendem Abstand von dem Ein- bzw. Auslasskanal (6, 8) abnimmt.

10. Elektrische Heizvorrichtung nach einem der vorherigen Ansprüche, **gekennzeichnet durch** eine in dem Gehäuse (2, 22, 24) vorgesehene Trennwand (34), die den Einlasskanal (6) zumindest teilweise begrenzt und eine Zirkulationskammer (36) für das zu erwärmende Fluid von einer Steuerkammer (38) zur Aufnahme einer Steuervorrichtung (40) trennt, die zumindest einen Verlustleistung erzeugenden Leistungsschalter umfasst, der wärmeleitend mit der Trennwand (34) gekoppelt ist.

11. Elektrische Heizvorrichtung nach einem der Ansprüche 5 bis 8, **dadurch gekennzeichnet, dass** eine der Verschlusskappen (22, 24) Anschlussstutzen (26) zu der Ein- und der Auslassöffnung aufweist und der anderen Verschlusskappe eine Leiterplatte (40) hinterlegt ist, deren Leiterbahnen mit Leiterbahnen zu mehreren wärmeerzeugenden Elementen (16) elektrisch verbunden sind.

12. Elektrische Heizvorrichtung nach einem der vorherigen Ansprüche, **dadurch gekennzeichnet, dass** die elektrische Heizvorrichtung eine Leiterplatte (40) umfasst und dass das Gehäuse (2, 22, 24) einen sich parallel zu den wärmeabgebenden und wärmeerzeugenden Elementen (14, 16) erstreckenden Gehäuseblock (2) aufweist, der eine Schiebführung für die Leiterplatte (40) ausweist, in die die Leiterplatte (40) eingeschoben ist und in der die Leiterplatte (40) unter Vorspannung gegen eine durch den Gehäuseblock (2) ausgebildete Trennwand anliegend gehalten ist.

13. Elektrische Heizvorrichtung nach einem der vorherigen Ansprüche, **dadurch gekennzeichnet, dass** das Flachrohr (28) zumindest endseitig mit einem Stopfen abgedichtet ist.

14. Elektrische Heizvorrichtung nach einem der vorherigen Ansprüche, **dadurch gekennzeichnet, dass** das Flachrohr (28) innerhalb des Gehäuses gegen eine Abdeckung des Gehäuses (2, 22, 24) abgedichtet ist.

## Claims

1. Electrical heating device with a fluid-tight casing (2, 22, 24) comprising inlet and outlet openings (25, 27) for the fluid to be heated and at least one heat-generating element (16) being received in a flat tube (28) and arranged in said casing (2, 22, 24), and with heat-emitting elements (14) abutting against opposite sides of said flat tube (28), wherein said heat-emitting elements (14) abut against said flat tube (28) subject to spring pretension, wherein a layering (12) composed of heat-generating and heat-emitting elements (14, 16) is provided, **characterized in that** said layering (12) abuts between casing walls (4) which on the inner side define an inlet and outlet passage (6, 8), respectively, extending in the longitudinal direction of said flat tube (28).

2. Electrical heating device according to claim 1, **characterized in that** said heat-generating element (16) comprises at least one PTC element (28.4) with conductor elements (28.2; 28.3) contacting to different polarities which abuts against said flat tube (28) subject to spring pretension.

3. Electrical heating device according to claim 1 or 2, **characterized in that** said conductor elements are received in said flat tube (28), and with the interposition of an electrical insulation, abut against the inner circumferential surface of said flat tube (28).

4. Electrical heating device according to one of the preceding claims, **characterized in that** said inlet and outlet passage (6, 8), respectively, is open over substantially the entire length of said flat tube (28) toward said layering composed of heat-emitting and heat-generating elements (14, 16).

5. Electrical heating device according to one of the preceding claims, **characterized in that** said casing (2, 22, 24) comprises a casing block (2), forming an abutment surface (10) for said layering (12) composed of heat-emitting and heat-generating elements (14, 16), the length of said casing block substantially corresponding to the length of said flat tube (28), wherein said casing block is open on both sides in the longitudinal direction of said flat tube (28) and wherein said casing block is closed by closure caps (22, 24) sealingly abutting against said casing block (2).

6. Electrical heating device according to claim 5, **characterized in that** at least one of said closure caps (22) comprises a connection port (26) surrounding said inlet and outlet openings, respectively.

7. Electrical heating device according to claim 5 or 6, **characterized in that** said flat tube (28) abuts in a sealed manner against one of said closure caps (22, 26), and at least one connection strip (32) being electrically coupled to one of said conductor elements is passed in an electrically insulated manner through said closure cap (22).

8. Electrical heating device according to one of the preceding claims, **characterized in that** said layering (12) is clamped between abutment surfaces (10) formed by an integrally designed casing block (2).

9. Electrical heating device according to one of the preceding claims, **characterized in that** the layering (12) is installed in an inclined manner, so that a flow cross-section (29) between said layering (12) and said casing (2) decreases as the distance from said inlet or outlet passage (6, 8) increases.

10. Electrical heating device according to one of the preceding claims, **characterized by** a partition wall (34) provided in said casing (2, 22, 24), which defines said inlet passage (6) at least in part and separates a circulation chamber (36) for the fluid to be heated from a control chamber (38) for accommodating a control device (40) which comprises at least one power switch creating power dissipation which is coupled in a heat-conductive manner to said partition wall (34).

11. Electrical heating device according to one of the claims 5 to 8, **characterized in that** one of said closure caps (22, 24) comprises connection ports (26) to said inlet and outlet openings, and the other of said closure caps is preferably provided with a printed circuit board (40), the conductor elements of which are electrically connected to conductor elements to several heat-generating elements (16).

12. Electrical heating device according to one of the preceding claims, **characterized in that** the electrical heating device comprises a printed circuit board (40) and that said casing (2, 22, 24) comprises a casing block (2) which extends parallel to said heat-emitting and heat-generating elements (14, 16) and has a sliding guide for the printed circuit board (40) into which the printed circuit board (40) is inserted and in which said printed circuit board (40) is held under pretension against a partition wall formed by said casing block (2).

13. Electrical heating device according to one of the preceding claims, **characterized in that** said flat tube (28) is sealed with a plug, at least at the face sides.

14. Electrical heating device according to one of the preceding claims, **characterized in that** said flat tube (28) is within said casing sealed against a cover of said casing (2, 22, 24).

## Revendications

1. Dispositif de chauffage électrique comprenant un boîtier étanche aux fluides (2, 22, 24) avec des ouvertures d'entrée et de sortie (25, 27) pour le fluide à chauffer et au moins un élément générateur de chaleur (16) disposé dans le boîtier (2, 22, 24) et logé dans un tube plat (28), et des éléments émetteurs de chaleur (14), dans lequel les éléments émetteurs de chaleur (14) reposent sur le tube plat (28) sous précontrainte élastique, une superposition (12) d'éléments générateurs et émetteurs de chaleur (14, 16) étant prévue, **caractérisé en ce que** la superposition (12) repose entre des parois de boîtier (4) qui délimitent intérieurement un canal d'entrée et de sortie (6, 8) s'étendant dans la direction longitudinale du tube plat (28).

2. Dispositif de chauffage électrique selon la revendication 1, **caractérisé en ce que** l'élément générateur de chaleur (16) présente au moins un élément CTP (28.4) qui est mis en contact avec des pistes conductrices (28.2; 28.3) de polarités différentes et qui s'appuie contre le tube plat (28) sous la sollicitation d'un ressort.

3. Dispositif de chauffage électrique selon les revendications 1 ou 2, **caractérisé en ce que** les pistes conductrices sont reçues dans le tube plat (28) et viennent en butée contre la surface circonférentielle intérieure du tube plat (28) avec interposition d'une isolation électrique.

4. Dispositif de chauffage électrique selon l'une des revendications précédentes, **caractérisé en ce que** le conduit d'entrée ou de sortie (6, 8) est ouvert sensiblement sur toute la longueur du tube plat (28) vers la stratification des éléments émetteurs et générateurs de chaleur (14, 16).

5. Dispositif de chauffage électrique selon l'une des revendications précédentes, **caractérisé en ce que** le boîtier (2, 22, 24) présente un bloc de boîtier (2) formant une surface d'appui (10) pour la stratification (12) d'éléments (14, 16) émettant et produisant de la chaleur, la longueur du bloc de boîtier (2) correspondant sensiblement à la longueur du tube plat, qui est fermé par des capuchons de fermeture (22, 24) ouverts des deux côtés dans la direction longitudinale du tube plat (28) et s'appuyant de manière étanche sur le bloc de boîtier (2).

6. Dispositif de chauffage électrique selon la revendication 5, **caractérisé en ce qu'au** moins un des bouchons de fermeture (22) comporte une pièce de raccordement (26) entourant l'ouverture d'entrée ou de sortie.

7. Dispositif de chauffage électrique selon les revendications 5 ou 6, **caractérisé en ce que** le tube plat (28) repose de manière étanche contre l'un des capuchons de fermeture (22, 26) et au moins une languette de raccordement (32) couplée électriquement à l'une des pistes conductrices est passée à travers le capuchon de fermeture (22) de manière électriquement isolée.

8. Dispositif de chauffage électrique selon l'une des revendications précédentes, **caractérisé en ce que** la stratification (12) est serrée entre des surfaces de butée (10) formées par un bloc de logement (2) d'une seule pièce.

9. Dispositif de chauffage électrique selon l'une des revendications précédentes, **caractérisé en ce que** la stratification (12) est installée à un angle tel qu'une section transversale d'écoulement (29) entre la stratification (12) et le boîtier (2) diminue avec l'augmentation de la distance du canal d'entrée ou de sortie (6, 8).

10. Dispositif de chauffage électrique selon l'une des revendications précédentes, **caractérisé par une** paroi de séparation (34) prévue dans le boîtier (2, 22, 24), qui délimite au moins partiellement le conduit d'entrée (6) et sépare une chambre de circulation (36) pour le fluide à chauffer d'une chambre de commande (38) destinée à recevoir un dispositif de commande (40), qui comprend au moins un interrupteur de puissance générant une dissipation de puissance, qui est couplé de manière thermoconductrice à la paroi de séparation (34).

11. Dispositif de chauffage électrique selon l'une des revendications 5 à 8, **caractérisé en ce que** l'un des capuchons de fermeture (22, 24) présente des pièces de raccordement (26) à l'ouverture d'entrée et de sortie et l'autre capuchon de fermeture présente une carte de circuit imprimé (40) déposée sur celui-ci, dont les pistes conductrices sont reliées électriquement à des pistes conductrices pour former une pluralité d'éléments générateurs de chaleur (16).

12. Dispositif de chauffage électrique selon l'une des revendications précédentes, **caractérisé en ce que** le dispositif de chauffage électrique comprend une carte de circuit imprimé (40) et **en ce que** le boîtier (2, 22, 24) comporte un bloc de boîtier (2) s'étendant parallèlement aux éléments (14, 16) émettant et générant de la chaleur, lequel bloc de boîtier (2) comporte un guide coulissant pour la carte de circuit imprimé (40), dans lequel guide coulissant la carte de circuit imprimé (40) est insérée et dans lequel la carte de circuit imprimé (40) est maintenue sous précontrainte contre une paroi de séparation formée par le bloc de boîtier (2).

13. Dispositif de chauffage électrique selon l'une des revendications précédentes, **caractérisé en ce que** le tube plat (28) est scellé au moins à ses extrémités par un bouchon.

14. Dispositif de chauffage électrique selon l'une des revendications précédentes, **caractérisé en ce que** le tube plat (28) est scellé à l'intérieur du boîtier contre un couvercle du boîtier (2, 22, 24).
